# FASCICULE DE BREVET EUROPEEN

(11) **EP 1 317 043 B1**
(45) Date de publication et mention de la délivrance du brevet: **30.12.2015**
(21) Numéro de dépôt: 02079826.0
(22) Date de dépôt: 21.11.2002
(51) Int. Cl.: H02J 7/00, A44C 5/02, G04C 10/00, A44C 5/00

(54) **Instrument portable à bracelet muni de moyens de connexion électrique**
Tragbares Armbandgerät mit elektrischen Verbindungsmitteln
Portable wristband instrument having electrical connection means

(30) Priorité: 27.11.2001 EP 01204691
(43) Date de publication de la demande: 04.06.2003
(73) Titulaire: ETA SA Manufacture Horlogère Suisse, 2540 Grenchen (CH)
(72) Inventeur: Noirjean, Pierre-André, 2802 Develier (CH); Robin, Brice, 2300 La Chaux-de-Fonds (CH)
(74) Mandataire: Ravenel, Thierry Gérard Louis

(56) Documents cités:
- EP-A- 0 669 664
- CH-A- 681 267
- US-A- 4 748 344
- US-A- 5 889 737
- US-A1- 2001 043 514

## Description

L'invention concerne un instrument portable disposant d'un bracelet, d'un circuit électronique et d'une source d'énergie rechargeable pour l'alimentation électrique du circuit électronique. Le bracelet comprend deux portions distinctes de contact électrique disposées sur une même branche du bracelet et des moyens de liaison électrique des portions de contact à la source d'énergie. L'instrument portable peut être par exemple une montre électronique qui comprend un boîtier, dans lequel un mouvement d'horlogerie et/ou un circuit garde-temps, le circuit électronique et la source d'énergie sont disposés, et un bracelet à une ou deux branches reliées au boîtier de la montre. L'instrument portable peut également être constitué du bracelet qui comprend la source d'énergie rechargeable et le circuit électronique.

L'invention concerne également un bracelet pour un instrument portable.

La source d'énergie équipant des instruments portables, tels que des montres-bracelets, doit en général être changée ou rechargée dès que son niveau d'alimentation électrique des composants électroniques n'est plus suffisant. La fréquence du changement ou de la charge d'une telle source d'énergie dépend fortement des multiples fonctions que l'instrument doit accomplir. Dans le cas par exemple d'une montre-bracelet, il peut être prévu de l'équiper de moyens d'émission et/ou de réception de signaux radiofréquences en plus des éléments habituels des fonctions horlogères. Ces moyens d'émission et/ou de réception sont en général de forts consommateurs en énergie électrique, même s'ils ne sont pas continuellement utilisés. De ce fait, la source d'énergie se décharge relativement vite. Il est donc nécessaire d'assurer un changement ou une recharge de la source d'énergie rapidement et facilement.

Pour permettre de recharger une source d'énergie rechargeable placée dans un boîtier d'un instrument, il a déjà été proposé de le faire à travers le boîtier par couplage magnétique. Pour ce faire, le boîtier non métallique de l'instrument est placé sur un support d'un chargeur électrique. La charge de la source d'énergie est réalisée par couplage inductif entre une bobine du chargeur et une bobine intégrée dans le boîtier de l'instrument. Même si le boîtier peut rester fermé et ainsi être isolé des contraintes de l'environnement pendant ces opérations, l'instrument doit comprendre en plus de la bobine du couplage magnétique, des moyens redresseurs pour recharger la source d'énergie, ce qui constitue un inconvénient.

Il peut encore être prévu de recharger une source d'énergie disposée dans un boîtier de l'instrument par l'intermédiaire d'un connecteur électrique sur une partie du boîtier. Dans ce cas, une prise d'un chargeur doit être branchée dans le connecteur électrique. Un inconvénient d'un tel dispositif réside dans les coûts de fabrication de l'instrument. De plus, il est relativement compliqué de réaliser un connecteur électrique directement dans une partie du boîtier tout en assurant l'étanchéité du boîtier.

On peut citer à ce titre, le brevet US 5,889,737, qui décrit un dispositif électronique portable au poignet d'un utilisateur. Le dispositif électronique comprend une source d'énergie logée dans le bracelet pour alimenter au moins un circuit électronique, et des contacts électriques accessibles depuis le bracelet pour pouvoir recharger la source d'énergie. Cependant les contacts électriques ne sont généralement pas protégés des conditions environnementales susceptibles de décharger la source d'énergie, ce qui constitue un inconvénient.

La demande de brevet US 2001/0043514 A1 décrit un instrument portable muni d'bracelet, qui correspond à une montre-bracelet. Le bracelet comprend dans chaque branche, des pistes de liaison électrique, qui sont composées au moins d'une piste de liaison à une borne de potentiel haut d'une batterie et d'une de liaison à une borne de potentiel bas de la batterie. Différents composants électroniques peuvent être monté sur le bracelet en étant connectés aux pistes de liaison électrique. Cependant rien n'est prévu pour pouvoir protéger des portions de contact électrique reliées aux pistes de liaison électrique sans composant électronique disposé sur le bracelet, ce qui constitue un inconvénient.

Le brevet US 4,748,344 décrit une ceinture, qui comprend une branche terminée d'un côté par une boucle à ardillon pour coopérer avec un parmi plusieurs trous disposés à une autre extrémité de la branche lors de la fermeture de la ceinture. Plusieurs paires de deux protubérances sont disposées dans plusieurs positions sur la ceinture et sont reliées électriquement à des pistes métalliques disposées entre deux couches de la ceinture. Un convertisseur de recharge de batterie et différents composants électronique peuvent être déplacés sur la ceinture et connectés aux protubérances. Cependant rien n'est prévu pour pouvoir protéger des portions de contact électrique reliées aux pistes de liaison électrique sans composant électronique disposé sur la ceinture, ce qui constitue un inconvénient.

L'objet de l'invention est de pallier aux inconvénients de l'art antérieur en proposant un instrument avec des moyens simples de connexion électrique à un chargeur électrique pour la recharge d'une source d'énergie d'un instrument portable.

Un autre objet de l'invention est de pouvoir protéger des portions de contact électrique des contraintes de l'environnement.

Ces objets, ainsi que d'autres, sont atteints par un instrument portable à bracelet qui comprend les caractéristiques mentionnées dans la revendication 1.

Un avantage d'un tel instrument portable, selon l'invention, réside dans le fait qu'uniquement deux portions de contact sont placées sur le bracelet de manière à faciliter la connexion à un chargeur électrique qui comprend des portions de connexion complémentaires. Les deux portions sont distantes l'une de l'autre de manière à pouvoir brancher par exemple une pince d'un chargeur ayant des portions complémentaires, et ainsi opérer facilement la recharge de la source d'énergie. Comme les portions de contact du bracelet sont en principe situées sur une même face du bracelet venant en contact avec le poignet d'un utilisateur, l'instrument doit être retiré du poignet de l'utilisateur pour la recharge de la source d'énergie.

Un autre avantage d'un tel instrument portable, selon l'invention, est que les deux portions sont situées sur une seule branche que le bracelet comprenne une ou deux branches. Ainsi, les coûts de fabrication sont fortement réduits, car les moyens de liaison, tels que des pistes métalliques, sont intégrés dans une seule branche.

Comme le bracelet est de préférence réalisé dans un matériau souple, tel que du caoutchouc, les pistes métalliques sont moulées dans le matériau lors de la fabrication d'une des branches du bracelet.

Les pistes métalliques servant de liaison entre les portions de contact et la source d'énergie peuvent également constituer une antenne pour des moyens de réception et/ou d'émission de l'instrument.

Il est à noter que l'instrument portable peut être uniquement un bracelet dans lequel sont intégrés une source d'énergie rechargeable et un circuit électronique. Le bracelet dans ce cas ne comprend qu'une branche ayant à ses extrémités des moyens de fermeture traditionnels. Le bracelet peut également être constitué de maillons extensibles dans lesquels sont placés les moyens de liaison électrique isolés.

Un autre avantage de l'instrument, selon l'invention, réside dans le fait qu'un passant d'un bracelet à deux branches peut servir à protéger les portions de contact des contraintes de l'environnement susceptibles de décharger la source d'énergie. Le passant peut être amené dans une position de blocage au-dessus des portions de contact lorsque l'instrument est porté au poignet d'un utilisateur. Des éléments de blocage complémentaires sont par exemple disposés sur la branche du bracelet au voisinage des portions de contact et sur le passant. Si le passant est réalisé dans un matériau souple, tel que du caoutchouc, il peut assurer une bonne isolation, lorsqu'il est dans sa position de blocage.

L'instrument portable est de préférence une montre-bracelet ayant un affichage de l'heure du type analogique ou digital. Toutefois, l'instrument peut être également utilisé dans le domaine médical ou dans le domaine des communications ou télécommunications.

Ces objets, ainsi que d'autres, sont également atteints par un bracelet qui comprend les caractéristiques mentionnées dans la revendication 8.

Les buts, avantages et caractéristiques de l'instrument portable à bracelet apparaîtront mieux dans la description suivante d'au moins une forme d'exécution illustrée par les dessins sur lesquels :
la figure 1 représente une vue de dessous d'un instrument, tel qu'une montre-bracelet, selon l'invention,
la figure 2a représente, dans une vue tridimensionnelle, une branche d'un bracelet de l'instrument, selon l'invention, sur lequel le passant de protection des portions de contact est libre de mouvement, et
la figure 2b représente, dans une vue tridimensionnelle, une branche d'un bracelet de l'instrument, selon l'invention, sur lequel le passant de protection occupe une position de blocage au-dessus des portions de contact.

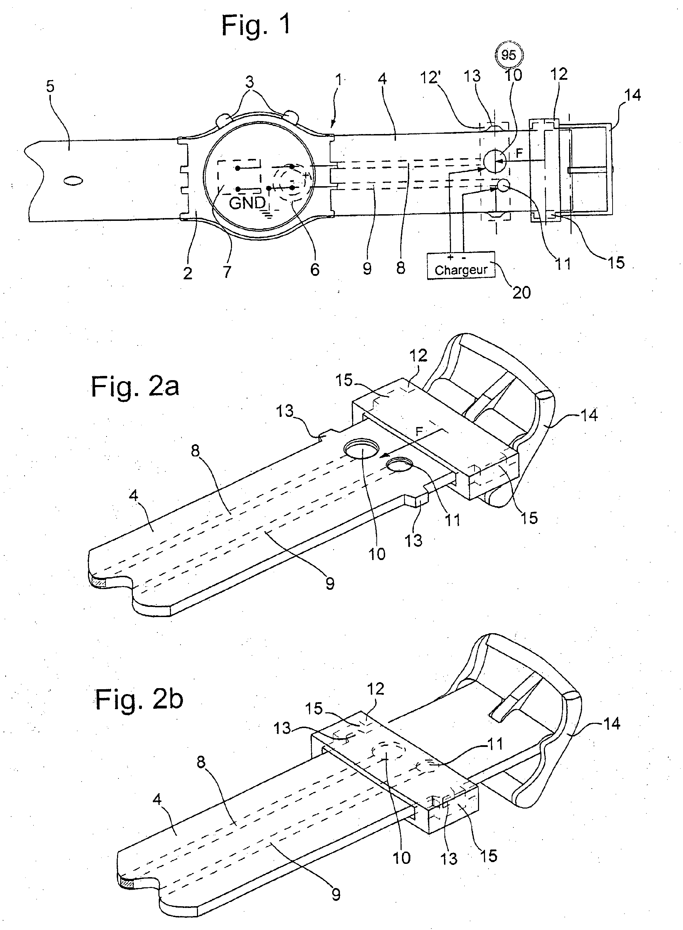

En référence à la figure 1, l'instrument portable 1 comprend un boîtier 2, une couronne ou au moins un bouton-poussoir 3, un bracelet à deux branches 4 et 5 reliées chacune sur un côté du boîtier 2, une source d'énergie rechargeable 6 et un circuit électronique 7 alimenté par la source d'énergie. Le circuit électronique 7 et la source d'énergie 6 sont logés dans le boîtier 2. L'instrument est de préférence une montre-bracelet qui comprend également dans le boîtier un mouvement d'horlogerie et/ou un circuit garde-temps alimentés par la source d'énergie, un cadran pour un affichage de l'heure de façon digitale ou analogique par des aiguilles, et un verre de montre fermant le boîtier. Ces éléments bien connus de la montre ne sont pas illustrés de manière à ne pas surcharger les figures.

Dans cette forme d'exécution, le bracelet comprend une première branche 4 ayant, à une extrémité, une boucle 14 et un ardillon, et une deuxième branche 5 munie de trous pour la fixation de cette branche 5 dans la boucle à ardillon de la branche 4. La première branche 4 comprend deux portions de contact électrique 10 et 11 reliées par des moyens de liaison 8 et 9 à la source d'énergie 6 dans le boîtier 2.

Les moyens de liaison sont constitués de deux pistes conductrices 8 et 9, par exemple métalliques, qui sont reliées chacune à une portion correspondante. Les pistes métalliques 8 et 9 sont intégrées dans la branche 4 du bracelet qui peut être réalisée en caoutchouc, en cuir ou en tout autre matériau souple isolant. Ces pistes métalliques 8 et 9 traversent le boîtier 2 de manière étanche pour venir connecter les pôles positif et négatif GND de la source d'énergie, telle qu'un accumulateur ou une batterie. Cependant, il peut également être envisagé qu'à l'extrémité de la branche 4 du côté du boîtier 2, les pistes métalliques 8 et 9 viennent en contact de plages métalliques du boîtier 2 reliées chacune à la source d'énergie.

Les portions de contact électrique 10 et 11 sont disposées sur une même face du bracelet qui vient en contact du poignet d'un utilisateur. Ces portions peuvent être deux pots conducteurs 10 et 11 intégrés dans l'épaisseur du bracelet et en léger retrait de la surface du bracelet pour ne pas venir directement en contact du poignet de l'utilisateur. Cela évite une décharge de la source d'énergie par contact direct des deux pots conducteurs avec la peau de l'utilisateur.

Lors d'une opération de recharge de la source d'énergie 6 par un chargeur 20, le bracelet est tout d'abord retiré du poignet de l'utilisateur. Deux tiges de contact électrique du chargeur, non représentées, sont insérées dans les deux pots conducteurs 10 et 11 correspondants. Les pots conducteurs 10 et 11, ainsi que les tiges du chargeur 20 devant être insérées chacune dans un pot correspondant, ont un diamètre différent pour interdire un branchement erroné des pôles positif et négatif du chargeur 20 (détrompeur). Les pots conducteurs 10 et 11 sont revêtus d'une dorure pour assurer un meilleur contact électrique avec les tiges du chargeur 20.

Même si ces pots sont en léger retrait de la surface du bracelet, cela n'assure pas entièrement que la peau d'un utilisateur ne vienne pas en contact des deux pots 10 et 11, si le bracelet est serré autour du poignet de l'utilisateur. De plus, il se peut que de la saleté, de la transpiration ou de l'eau contacte les deux pots conducteurs et ainsi décharge la source d'énergie relativement rapidement. Il est donc prévu d'utiliser le passant 12 du bracelet pour venir recouvrir et protéger lesdits pots conducteurs lorsque l'instrument est porté au poignet.

A la figure 1, le passant 12 est montré libre de mouvement dans une position reculée des zones de portions de contact 10 et 11 pour permettre à des tiges d'un chargeur d'être branchées dans les pots 10 et 11 pour la recharge de la source d'énergie. Le passant 12 peut aussi être déplacé dans une direction F jusqu'à une position de blocage 12' montrée en traits interrompus sur la figure.

Pour garantir un blocage du passant 12 lorsqu'il recouvre les portions de contact 10 et 11, il est prévu des éléments de blocage complémentaires 13 et 15 disposés chacun par exemple à l'intérieur du passant 12 et à l'extérieur du bracelet 4. Pour ce faire, la branche 4 du bracelet comprend au moins une protubérance 13 sur le côté du bracelet, et le passant comprend au moins un logement intérieur 15. Comme le passant 12 est réalisé généralement en matériau souple, tel qu'en caoutchouc, il est facile de déplacer le passant dans la direction F pour que son logement 15 vienne recevoir la protubérance 13 du bracelet. De cette façon, le passant 12 se trouve dans une position de blocage pour recouvrir et protéger les portions de contact 10 et 11 des contraintes de l'environnement.

De préférence, le passant 12 comprend deux logements 15 opposés pour venir se placer au-dessus de deux protubérances opposées 13 du bracelet. Chaque protubérance 13 peut comprendre des plans inclinés sur chaque côté pour placer facilement le passant dans sa position de blocage.

Dans une autre forme d'exécution de l'instrument non illustrée, le passant peut comprendre au moins une protubérance pour être placée dans une position de blocage dans au moins un logement du bracelet.

Lorsque l'instrument portable 1 est porté au poignet de l'utilisateur, une extrémité de la branche 5 passe à travers le passant 12. Ainsi, une surface intérieure du passant 12 est pressée en direction des pots conducteurs pour assurer une meilleure isolation.

Dans une forme d'exécution non illustrée, le passant 12 peut être muni d'une creusure débouchant du côté de la protubérance du bracelet afin d'opérer un coulissement de la creusure du passant sur la protubérance jusqu'à la position de blocage.

La figure 2a montre de manière plus détaillée une vue tridimensionnelle de la branche 4 du bracelet. On peut voir dans cette figure le passant 12 libre de mouvement en appui contre la boucle 14. Le passant 12 peut être déplacé entre les zones des portions de contact 10 et 11 et la boucle 14 ce qui évite au passant 12 de s'échapper lors du montage du bracelet au boîtier de l'instrument. Le bracelet de l'instrument peut encore comprendre un deuxième passant non illustré dans le cas où le premier passant ne suffit pas à maintenir la seconde branche du bracelet.

La figure 2b montre de manière plus détaillée une vue tridimensionnelle de la branche 4 du bracelet quand le passant occupe sa position de blocage au-dessus des portions de contact 10 et 11. On peut voir sur cette figure, les deux protubérances 13 enfermées dans les deux logements 15 du passant 12.

A partir de la description qui vient d'être faite de multiples variantes de réalisation de l'instrument et du bracelet, peuvent être conçues par l'homme du métier sans sortir du cadre de l'invention définie par les revendications. Par exemple, les portions de contact 10 et 11 de la branche 4 du bracelet, peuvent être deux tiges métalliques débouchant par exemple hors de l'épaisseur du bracelet. Ainsi le chargeur doit comprendre deux pots conducteurs pour la connexion aux tiges du bracelet pour la recharge de la source d'énergie. Les tiges du bracelet peuvent également servir d'éléments de blocage du passant qui les recouvrent.

Les moyens de liaison électrique peuvent être réalisés d'une manière différente qu'une liaison uniquement résistive entre les portions de contact et la source d'énergie.

Il peut être prévu également que les deux portions de contact soient disposées chacune sur une face différente de la branche 4 du bracelet ou sur une même face externe. Ces portions de contact peuvent être seulement des surfaces de contact sur le bracelet. De plus, le bracelet peut ne comprendre qu'une seule branche ou être constitué de maillons. Dans ce dernier cas, une bande portant les pistes métalliques doit passer à travers chaque maillon du bracelet tout en assurant une isolation des pistes métalliques connectant la source d'énergie.

## Revendications

1. Instrument portable (1) à bracelet (4, 5), comprenant un circuit électronique (7) et une source d'énergie rechargeable (6) pour alimenter en électricité le circuit électronique, le bracelet comprenant deux portions distinctes de contact électrique (10, 11) disposées sur une même branche (4) du bracelet et des moyens de liaison électrique (8, 9) des portions de contact à la source d'énergie, les deux portions de contact électrique (10, 11) étant destinées à être placées sur deux portions conductrices complémentaires d'un chargeur électrique (20) pour permettre de recharger la source d'énergie, **caractérisé en ce qu'**il comprend un passant (12) convenant à être déplacé sur le bracelet et occuper une position de blocage au-dessus des portions de contact électrique (10, 11) pour les recouvrir et les protéger et **en ce que** le bracelet (4) et le passant (12) comprennent des éléments de blocage (13, 15) complémentaires afin de permettre au passant d'être bloqué dans sa position de blocage pour recouvrir et protéger les portions de contact (10, 11).

2. Instrument portable selon la revendication 1, **caractérisé en ce que** le circuit électronique (7) et/ou la source d'énergie (6) sont intégrés dans le bracelet.

3. Instrument portable selon la revendication 1, **caractérisé en ce que** les portions de contact électrique sont deux pots conducteurs (10, 11) logés dans l'épaisseur du bracelet.

4. Instrument portable selon la revendication 3, **caractérisé en ce que** les deux pots conducteurs (10, 11) ont une section de contact différente afin de servir de détrompeur lors de la connexion aux portions complémentaires d'un chargeur.

5. Instrument portable selon la revendication 1, le bracelet comprenant deux branches (4, 5), **caractérisé en ce que** le passant peut être déplacé librement sur la première branche (4) et occuper la position de blocage recouvrant les portions de contact, et **en ce que** l'extrémité libre de la seconde branche (5) du bracelet peut être insérée dans le passant pour presser en direction des portions de contact électrique une surface intérieure du passant (12) afin de protéger les portions de contact.

6. Instrument portable selon la revendication 1, **caractérisé en ce que** les moyens de liaison sont deux pistes conductrices (8, 9), qui sont connectées chacune à une portion de contact respective, et qui sont placées à l'intérieur d'une unique branche du bracelet, les pistes conductrices traversant un boîtier (2) de l'instrument pour venir connecter les deux pôles de la source d'énergie logée dans le boîtier (2).

7. Bracelet d'un instrument portable selon l'une des revendications précédentes, comprenant deux portions de contact électrique (10, 11) disposées sur une même branche (4) afin de pouvoir être placées sur des portions complémentaires d'un chargeur, **caractérisé en ce qu'**il comprend un passant (12) convenant à être déplacé sur le bracelet et occuper une position de blocage sur les portions de contact pour les recouvrir et les protéger, et **en ce que** le bracelet (4) et le passant (12) comprennent des éléments de blocage (13, 15) complémentaires afin de permettre au passant d'être bloqué dans sa position de blocage pour recouvrir et protéger les portions de contact (10,11).

## Patentansprüche

1. Tragbares Instrument (1) mit Armband (4, 5), das eine elektronische Schaltung (7) und eine wiederaufladbare Energiequelle (6) für die Versorgung der elektronischen Schaltung mit Elektrizität umfasst, wobei das Armband zwei verschiedene Abschnitte (10, 11) für elektrischen Kontakt, die auf einem selben Zweig (4) des Armbandes angeordnet sind, und Mittel (8, 9) für die elektrische Verbindung der Kontaktabschnitte mit der Energiequelle umfasst, wobei die zwei Abschnitte (10, 11) für elektrischen Kontakt dazu bestimmt sind, auf zwei komplementären leitenden Abschnitten einer elektrischen Ladeeinrichtung (20) angeordnet zu werden, um das Wiederaufladen der Energiequelle zu ermöglichen, **dadurch gekennzeichnet, dass** es eine Schlaufe (12) umfasst, die auf dem Armband verlagert werden kann und eine Sperrposition über den Abschnitten (10, 11) für elektrischen Kontakt einnehmen kann, um diese abzudecken und zu schützen, und dass das Armband (4) und die Schlaufe (12) komplementäre Sperrelemente (13, 15) umfassen, um zu ermöglichen, dass die Schlaufe in ihrer Sperrposition blockiert wird, um die Kontaktabschnitte (10, 11) abzudecken und zu schützen.

2. Tragbares Instrument nach Anspruch 1, **dadurch gekennzeichnet, dass** die elektronische Schaltung (7) und/oder die Energiequelle (6) in das Armband integriert sind.

3. Tragbares Instrument nach Anspruch 1, **dadurch gekennzeichnet, dass** die Abschnitte für elektrischen Kontakt leitende Töpfe (10, 11) sind, die in der Dicke des Armbandes untergebracht sind.

4. Tragbares Instrument nach Anspruch 3, **dadurch gekennzeichnet, dass** die zwei leitenden Töpfe (10, 11) einen unterschiedlichen Kontaktquerschnitt haben, um bei der Verbindung mit den komplementären Abschnitten eines Ladegeräts als Unverwechselbarkeitsmerkmale zu dienen.

5. Tragbares Instrument nach Anspruch 1, wobei das Armband zwei Zweige (4, 5) umfasst, **dadurch gekennzeichnet, dass** die Schlaufe auf dem ersten Zweig (4) frei verlagert werden kann und die Sperrposition einnehmen kann, in der sie die Kontaktabschnitte abdeckt, und dass das freie Ende des zweiten Zweigs (5) des Armbandes in die Schlaufe eingesetzt werden kann, um in Richtung der Abschnitte für elektrischen Kontakt auf eine innere Oberfläche der Schlaufe (12) zu drücken, um die Kontaktabschnitte zu schützen.

6. Tragbares Instrument nach Anspruch 1, **dadurch gekennzeichnet, dass** die Verbindungsmittel zwei Leiterbahnen (8, 9) sind, die jeweils mit einem entsprechenden Kontaktabschnitt verbunden sind und die innerhalb eines einzigen Zweigs des Armbandes angeordnet sind, wobei die leitenden Bahnen ein Gehäuse (2) des Instruments durchqueren, um mit den zwei Polen der Energiequelle, die sich in dem Gehäuse (2) befindet, verbunden zu werden.

7. Armband eines tragbaren Instruments nach einem der vorhergehenden Ansprüche, das zwei Abschnitte (10, 11) für elektrischen Kontakt umfasst, die auf einem selben Zweig (4) angeordnet sind, um auf komplementären Abschnitten eines Ladegeräts angeordnet zu werden, **dadurch gekennzeichnet, dass** es eine Schlaufe (12) umfasst, die auf dem Band verlagert werden kann und eine Sperrposition auf den Kontaktabschnitten einnehmen kann, um sie abzudecken und zu schützen, und dass das Armband (4) und die Schlaufe (12) komplementäre Sperrelemente (13, 15) umfassen, um zu ermöglichen, dass die Schlaufe in ihrer Sperrposition blockiert wird, um die Kontaktabschnitte (10, 11) abzudecken und zu schützen.

## Claims

1. Portable instrument (1) with a wristband (4, 5), including an electronic circuit (7) and a rechargeable power source (6) for supplying the electronic circuit with electricity, the wristband including two distinct electric contact portions (10, 11) arranged on a same strand (4) of the wristband and means (8, 9) for electrically connecting the contact portions to the power source, the two electric contact portions (10, 11) being intended to be placed on two complementary conductive portions of an electric charger (20) to allow the power source to be recharged,
**characterized in that** it includes a loop (12) able to be moved on the wristband and to occupy a blocking position above the electric contact portions (10, 11) to cover them and protect them and
**in that** the wristband (4) and the loop (12) include complementary blocking elements (13, 15) in order to allow the loop to be blocked in its blocking position to cover and protect the contact portions (10, 11).

2. Portable instrument according to claim 1, **characterized in that** the electronic circuit (7) and/or the power source (6) are integrated in the wristband.

3. Portable instrument according to claim 1, **characterized in that** the electric contact portions are two conductive plots (10, 11) housed in the thickness of the wristband.

4. Portable instrument according to claim 3, **characterized in that** the two conductive plots (10, 11) have a different contact section in order to act as a foolproof device during connection to the complementary portions of a charger.

5. Portable instrument according to claim 1, the wristband including two strands (4, 5), **characterized in that** the loop can be freely moved on the first strand (4) and to occupy the blocking position covering the contact portions, and **in that** the free end of the second strand (5) of the wristband can pass through the loop to press an inner surface of loop (12) in the direction of electric contact portions in order to protect the contact portions.

6. Portable instrument according to claim 1, **characterized in that** the connection means are two conductive paths (8, 9), which are each connected to a respective contact portion and which arranged within a single strand of the wristband, the conductive paths passing through a case (2) of the instrument to connect the two poles of the power source housed in the case (2).

7. Wristband of a portable instrument according to any of the preceding claims, **characterized in that** it includes two electric contact portions (10, 11) arranged on a same strand (4) in order to be able to be placed on complementary portions of a charger, **characterized in that** it includes a loop (12) able to be moved on the wristband and to occupy a blocking position above the contact portions (10, 11) to cover them and protect them, and **in that** the wristband (4) and the loop (12) include complementary blocking elements (13, 15) in order to allow the loop to be blocked in its blocking position to cover and protect the contact portions (10, 11).
